# EUROPEAN PATENT APPLICATION

(11) **EP 4 744 933 A1**
(43) Date of publication of application: **20.05.2026**
(21) Application number: 24211986.5
(22) Date of filing: 11.11.2024
(51) Int. Cl.: B60L 1/00, B60L 3/00, B60L 3/12, B60L 7/22, B60L 50/75, B60L 58/33, B60L 58/40, H01M 8/04007, H01M 8/04119, H01M 8/04228, H01M 8/04223, H01M 8/04303, H01M 8/04492, H01M 8/04537, H01M 8/04701, H01M 8/04746, H01M 8/04828, H01M 8/04858, H01M 8/04955, H01M 16/00, B60L 15/20

(54) **A COMPUTER SYSTEM AND A METHOD FOR CONTROLLING A FUEL CELL SYSTEM**

(71) Applicant: Volvo Truck Corporation, 405 08 Göteborg (SE)
(72) Inventor: HINDI, Gustavo, 449 50 ALAFORS (SE); BLOMGREN, Fredrik, 425 35 KÄRRA (SE); LUNDGREN, Staffan, 438 53 HINDÅS (SE)
(74) Representative: Kransell & Wennborg KB

(57) **Abstract**

A method and a computer system (50) for controlling a fuel cell system (1), such as of a vehicle, is disclosed. The computer system comprises comprising processing circuitry configured to:
predict an event, such as a downhill road section, during which a power ramp down of the fuel cell system is expected,
control the fuel cell system to recuperate water from at least one fuel cell exhaust line (13, 14) and collect the recuperated water in a water reservoir (23) in dependence on the predicted event,
control a water injector (25) to inject water from the water reservoir (23) into a cathode inlet line (11) of the fuel cell system in connection with the power ramp down during the predicted event.

## Description

### TECHNICAL FIELD

The disclosure relates generally to fuel cell systems. In particular aspects, the disclosure relates to a fuel cell system, a computer system and a method for controlling a fuel cell system, and a vehicle. The disclosure can be applied to heavy-duty vehicles, such as trucks, buses, and construction equipment, among other vehicle types. The disclosure may also be applied to stationary fuel cell systems, such as in stationary power plants. Although the disclosure may be described with respect to a particular vehicle, the disclosure is not restricted to any particular vehicle.

### BACKGROUND

In fuel cell systems, a too fast ramp down of the output power produced by the fuel cell system can lead to an increase in stack temperature, membrane dehydration, and undesired spikes in single fuel cell voltage. This may reduce efficiency and service life of the fuel cell system.

For safety reasons, it is desirable that fuel cell systems of fuel cell electric vehicles are able to ramp down the power quickly in certain situations, such as when a period of high propulsion power is suddenly interrupted by a brake event of high brake power. During the brake event, all power produced by the fuel cell system has to be either stored in a battery of the vehicle, or dissipated via a cooling system and/or an auxiliary braking system. If the power ramp down is too slow, the service brakes need to be applied during an initial part of a downhill road section, unless a delay before the vehicle starts to slow down, or even an initial acceleration, is acceptable. A too slow power ramp down will result in production of electrical power that will have no use, requiring to be wasted somewhere in the vehicle. Furthermore, the fuel cell system will produce heat that needs to be dissipated by the cooling system, in turn limiting the ability of the cooling system to handle the rapid and increasing demand from the auxiliary braking system. This will limit the actual braking performance of the vehicle.

### SUMMARY

According to a first aspect of the disclosure, a computer system comprising processing circuitry is provided. The processing circuitry is configured to:
predict an event during which a power ramp down of a fuel cell system is expected,
control the fuel cell system to recuperate water from at least one fuel cell exhaust line and collect the recuperated water in a water reservoir in dependence on the predicted event,
control a water injector to inject water from the water reservoir into a cathode inlet line of the fuel cell system in connection with the power ramp down during the predicted event.

The first aspect of the disclosure may seek to provide an in at least some aspect improved computer system for controlling a fuel cell system, such as in a vehicle or in a stationary power plant. In particular, it may seek to provide a computer system that enables a relatively fast power ramp down of the fuel cell system when needed. A technical benefit may include that, thanks to the prediction of the power ramp down event and the proactive recuperation of water, it may be ensured that a sufficient amount of water is available to inject into the cathode inlet line to enable a fast power ramp down when necessary. In this way, fast power ramp down of the fuel cell system during brake events of a fuel cell electric vehicle may be effected, while the risk of damaging the fuel cell system due to e.g. dehydration of a membrane of the fuel cell system during the power ramp down remains low.

Optionally in some examples, including in at least one preferred example, the processing circuitry is configured to control the fuel cell system to recuperate and collect water by determining an amount of water to be injected during the predicted event, and controlling an amount of water collected in the reservoir to at least the determined amount of water to be injected. A technical benefit may include ensuring sufficient water availability for injection, further reducing the risk of dehydration during power ramp down events.

Optionally in some examples, including in at least one preferred example, the processing circuitry is further configured to monitor at least one operational parameter of the fuel cell system, wherein the processing circuitry is configured to control the water injector based on the monitored at least one operational parameter. A technical benefit may include optimizing water injection based on real-time system conditions, reducing the risk of dehydrating and/or flooding a membrane of the fuel cell system during the power ramp down.

Optionally in some examples, including in at least one preferred example, the at least one operational parameter comprises at least a fuel cell voltage, and the processing circuitry is configured to control the water injector by controlling the water injection to maintain a magnitude of the fuel cell voltage above a predetermined threshold level or within a predetermined voltage range. A technical benefit may include a reduced risk of dehydrating and/or flooding the membrane, since the fuel cell voltage is indicative of a water content of the membrane. Hence, a service life of the membrane may be improved.

The at least one operational parameter may further include a temperature of the fuel cell system, such as an inlet and/or an outlet temperature of coolant used for cooling a fuel cell stack of the fuel cell system. The processing circuitry may be configured to control the water injector by controlling the water injection to maintain the temperature below a threshold temperature, or within a predetermined temperature range. A technical benefit may include a reduced risk of dehydrating and/or flooding the membrane, since the fuel cell temperature is indicative of a water content of the membrane. Hence, a service life of the membrane may be improved.

Optionally in some examples, including in at least one preferred example, the processing circuitry is configured to predict the event by predicting an expected travelling route of a vehicle in which the fuel cell system is arranged to provide output power for propulsion of the vehicle and for charging of an electric energy storage system, detecting a downhill road section along the expected travelling route, and determining that a predetermined power ramp down condition is expected to be fulfilled along the detected downhill road section. A technical benefit may include preemptively managing fuel cell operations to reduce unnecessary fuel consumption and enable more efficient braking during predictable downhill road sections.

Optionally in some examples, including in at least one preferred example, the processing circuitry is further configured to predict the event by predicting a fuel cell power expected to be produced by the fuel cell system at least at a start of the detected downhill road section, predicting a power capability of the electric energy storage system at least at the start of the detected downhill road section, and predicting a brake power request along the detected downhill road section, wherein the processing circuitry is configured to determine that the predetermined power ramp down condition is fulfilled based on the predicted brake power request, the predicted power capability of the electric energy storage system, and the predicted fuel cell power. A technical benefit may include a sufficiently accurate prediction of the event during which a fast power ramp down would be beneficial for improving the braking efficiency.

Optionally in some examples, including in at least one preferred example, the predetermined power ramp down condition is considered fulfilled when a sum of the predicted fuel cell power and the predicted brake power exceeds the predicted power capability of the electric energy storage system during at least a part of the downhill road section, such as for at least a predetermined minimum duration. A technical benefit may include an accurate discrimination between braking events during which water injection to enable a faster power ramp down is desired to enable efficient braking, and events during which power produced by the fuel cell system may be, e.g., stored in the electric energy storage system, without negatively affecting the braking performance.

Optionally in some examples, including in at least one preferred example, the processing circuitry is further configured to control the fuel cell system to discard the water collected in the water reservoir in connection with shutdown of the fuel cell system. A technical benefit may include preventing water retention in the water reservoir during inactive states, such as when a fuel cell vehicle is parked, potentially reducing risks of water buildup and freezing.

According to a second aspect of the disclosure, a fuel cell system comprising the computer system of the first aspect is provided. Advantages and effects of the second aspect of the disclosure are largely analogous to the advantages and effects of the first aspect of the disclosure. For example, the second aspect of the disclosure may seek to provide a fuel cell system in which a relatively fast power-ramp down is enabled.

Optionally in some examples, including in at least one preferred example, the fuel cell system further comprises a fuel cell stack, a water reservoir for collection of water from at least one exhaust line from the fuel cell stack, and a water injector for injection of water from the water reservoir into a cathode inlet line of the fuel cell stack. The fuel cell stack may comprise a plurality of fuel cells, such as proton-exchange membrane fuel cells, or any other type of fuel cells in which the proton conduction is relying on water. The fuel cell system may be configured for recuperation of water from at least a cathode exhaust line, optionally also from an anode exhaust line. A technical benefit may include the provision of a fuel cell system in which water injection of water recuperated from the fuel cell exhaust may be injected into the cathode inlet line to enable faster power ramp down with reduced risk of membrane dehydration.

According to a third aspect of the disclosure, a vehicle comprising the fuel cell system according to the second aspect is provided. The third aspect of the disclosure may seek to provide an in at least some aspect improved fuel cell electric vehicle. Advantages and effects of the third aspect of the disclosure are largely analogous to the advantages and effects of the first and second aspects of the disclosure.

Optionally in some examples, including in at least one preferred example, the vehicle further comprises an electric energy storage system and an electric propulsion system, wherein the fuel cell system is arranged to provide output power for charging of the electric energy storage system and for driving the electric propulsion system.

According to a fourth aspect of the disclosure, a computer-implemented method for controlling a fuel cell system is provided. The method comprises:
predicting, by processing circuitry of a computer system, an event during which a power ramp down of the fuel cell system is expected,
controlling, by the processing circuitry, the fuel cell system to recuperate water from at least one fuel cell exhaust line and collect the recuperated water in a water reservoir in dependence on the predicted event, and
controlling, by the processing circuitry, a water injector to inject water from the water reservoir into a cathode inlet line of the fuel cell system in connection with the power ramp down during the predicted event.

The fourth aspect of the disclosure may seek to provide an in at least some aspect improved method for controlling a fuel cell system. Advantages and effects of the fourth aspect of the disclosure are largely analogous to the advantages and effects of the first aspect of the disclosure.

Optionally in some examples, including in at least one preferred example, the controlling of the fuel cell system to recuperate and collect water comprises determining an amount of water to be injected during the predicted event, and controlling an amount of water collected in the reservoir to at least the determined amount of water to be injected.

Optionally in some examples, including in at least one preferred example, the method further comprises monitoring, by the processing circuitry, at least one operational parameter of the fuel cell system, wherein the controlling of the water injector is based on the monitored at least one operational parameter.

Optionally in some examples, including in at least one preferred example, the at least one operational parameter comprises a fuel cell voltage, and the controlling of the water injector comprises controlling the water injection to maintain a magnitude of the fuel cell voltage above a predetermined threshold level or within a predetermined voltage range.

The at least one operational parameter may further include a temperature of the fuel cell system, such as an inlet and/or an outlet temperature of coolant used for cooling a fuel cell stack of the fuel cell system. The controlling of the water injector may comprise controlling the water injection to maintain the temperature below a threshold temperature, or within a predetermined temperature range.

Optionally in some examples, including in at least one preferred example, the predicting of the event comprises predicting an expected travelling route of a vehicle in which the fuel cell system is arranged to provide output power for propulsion of the vehicle and for charging of an electric energy storage system, detecting a downhill road section along the expected travelling route, and determining that a predetermined power ramp down condition is expected to be fulfilled along the detected downhill road section.

Optionally in some examples, including in at least one preferred example, the predicting of the event further comprises predicting a fuel cell power expected to be produced by the fuel cell system at least at a start of the detected downhill road section, predicting a power capability of the electric energy storage system at least at the start of the detected downhill road section, and predicting a brake power request along the detected downhill road section, wherein the determining of that the predetermined power ramp down condition is fulfilled is based on the predicted brake power request, the predicted power capability of the electric energy storage system, and the predicted fuel cell power.

Optionally in some examples, including in at least one preferred example, the predetermined power ramp down condition is fulfilled when a sum of the predicted fuel cell power and the predicted brake power exceeds the predicted power capability of the electric energy storage system during at least a part of the downhill road section, such as for at least a predetermined minimum duration.

Optionally in some examples, including in at least one preferred example, the method further comprises controlling, by the processing circuitry, the fuel cell system to discard the water collected in the water reservoir in connection with shutdown of the fuel cell system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is a schematic illustration of a fuel cell system according to an example.
**FIG. 3** is an exemplary system diagram of a computer system according to an example.
**FIG. 4** is a flowchart illustrating an exemplary method according to an example.
**FIG. 5** is another flowchart illustrating an exemplary method according to an example.
**FIG. 6** is a schematic diagram of an exemplary computer system for implementing examples disclosed herein, according to an example.

The drawings are not necessarily drawn to scale. It shall also be noted that some details in the drawings may be exaggerated in order to better describe and illustrate the particular example. Like reference characters refer to like elements throughout the description, unless expressed otherwise. Some reference characters may have been omitted in some of the drawings for clarity.

### DETAILED DESCRIPTION

The detailed description set forth below provides information and examples of the disclosed technology with sufficient detail to enable those skilled in the art to practice the disclosure.

In fuel cell systems comprising proton-exchange membrane fuel cells (PEMFC), a too fast ramp down of the output power produced by the fuel cell system can lead to an increase in stack temperature, membrane dehydration, and undesired spikes in single fuel cell voltage. The dehydration of the membrane causes increased ohmic losses and heat production, and the variation in water content as the membrane swells and shrinks causes mechanical stress. The voltage spikes may lead to platinum dissolution reducing the electrochemically surface area (ECSA), thus reducing efficiency and service life of the fuel cell system.

For safety reasons, it is desirable that fuel cell systems providing propulsion power to propel fuel cell electric vehicles are able to ramp down the power quickly in certain situations, such as when a period of high propulsion power is suddenly interrupted by a brake event of high brake power. This may be the case when the road gradient suddenly changes from uphill to downhill. To avoid using service brakes of the vehicle, leading to particle emissions and brake wear, it is preferred to use an auxiliary braking system. This may include regenerative braking, during which energy is stored in a battery of the vehicle, and the use of, e.g., an electrical, hydraulic, or pneumatic retarder. During the brake event, all power produced by the fuel cell system has to be either stored in the battery or dissipated via the cooling system and/or the auxiliary braking system. Hence, every kilowatt of produced fuel cell power during the brake event is one kilowatt less of brake power. If the power ramp down is too slow, the service brakes need to be applied during the initial part of the downhill road section, unless a delay before the vehicle starts to slow down, or even an initial acceleration, is acceptable. Furthermore, if the battery is heated as the vehicle enters the downhill road section, utilization of battery peak power to reduce the delay may deteriorate service life of the battery.

When the time it takes for the fuel cell system to ramp down its output power from a high-power level to a minimum level, such as at idle, is relatively long during a brake event, two main detrimental effects will arise. First, electrical power is produced that will have no use, requiring to be wasted somewhere in the vehicle. Second, the fuel cell system will produce heat that needs to be dissipated by the cooling system, in turn limiting the ability of the cooling system to handle the rapid and increasing demand from the auxiliary braking system. This will limit the actual braking performance of the vehicle.

In stationary applications, such as in a power plant, where a fast disconnection from the grid or a sudden drop in electrical power is required, it is also desirable to be able to quickly ramp down the output power from the fuel cell system. The longer the fuel cell system takes to reduce its power, the higher will be the wasted energy and the inefficiency of the system in the application.

The present disclosure aims at providing means and methods for proactively enabling a faster power ramp down of fuel cell systems in situations where such a fast power ramp down is beneficial.

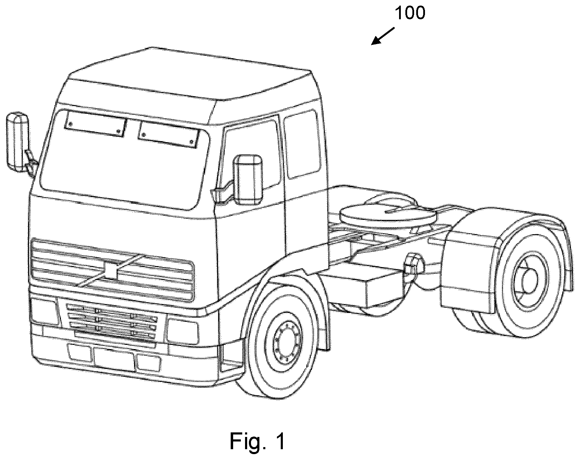

**FIG. 1** is a perspective view of an exemplary vehicle 100 according to an example. The vehicle 100 is herein a heavy-duty truck, and more particularly a towing truck for towing one or more trailers (not shown). It shall however be noted that the present disclosure is applicable to any other vehicle, such as any other truck, a bus, a passenger car, construction equipment, such as a wheel loader, an excavator, a dump truck etc. The vehicle 100 is a fuel cell electric vehicle.

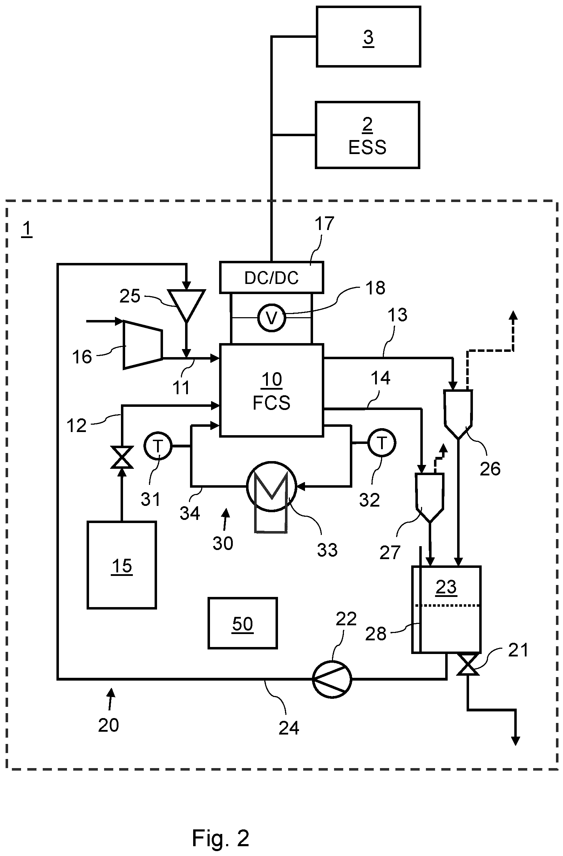

**FIG. 2** schematically illustrates a fuel cell system 1 according to an example of the disclosure. The fuel cell system 1 may be provided in a vehicle 100, such as in the vehicle 100 illustrated in FIG. 1, in which it may be configured to produce electrical power for driving an electric propulsion system 3 of the vehicle 100, comprising one or more electric motors. The fuel cell system 1 is further connected to an electric energy storage system 2 of the vehicle 100, comprising one or more batteries. The fuel cell system 1 is arranged to provide output power for charging of the electric energy storage system 2 and for driving the electric propulsion system 3. At times when the power produced by the fuel cell system 1 is insufficient for meeting a power request of the electric energy propulsion system 3, energy stored in the electric energy storage system 2 may be used in addition to the fuel cell power produced by the fuel cell system 1. Similarly, when the power request of the electric energy propulsion system 3 is relatively low, such as when travelling downhill, power produced by the fuel cell system 1 may be stored in the electric energy storage system 2.

The fuel cell system 1 comprises a fuel cell stack (FCS) 10, which in turn may comprise a plurality of fuel cells, such as proton-exchange membrane fuel cells. The fuel cell stack 10 ha an anode side, to which fuel in the form of hydrogen, H₂, from a fuel tank 15 is delivered via an anode inlet line 12. It further has a cathode side to which compressed air from a compressor 16 is delivered via a cathode inlet line 11. The fuel cell stack 10 is configured to produce electrical power, which is converted in a power converter 17, such as a DC/DC converter, before being delivered to the electric power propulsion system 3 and/or to the electric energy storage system (ESS) 2. A voltage sensor 18 is provided for measuring a fuel cell voltage, indicative of single fuel cell voltage within the fuel cell stack 10.

Exhaust from the anode side, expelled via an anode exhaust line 14, may include unreacted fuel and water vapor. Exhaust from the cathode side, comprising primarily water vapor and air, is expelled via a cathode exhaust line 13. Exhaust streams from both sides are fed via the exhaust lines 13, 14 to water separators 26, 27, enabling separation of liquid water from the exhaust streams. The water separators 26, 27 may, for example, include a heat exchanger, a condenser, a cyclonic water separator, etc. The water separators 26, 27 form part of a water recuperation and injection system 20 and enable recuperation of water from the fuel cell exhaust streams. Although in the illustrated example, water can be recuperated from both the anode and the cathode exhaust lines, it may be sufficient to recuperate water only from the cathode exhaust line 13. The water recuperation and injection system 20 further comprises a water reservoir 23 fluidly connected to the water separators 26, 27, to which recuperated water is fed. The water reservoir 23 comprises an outlet valve 21, enabling discarding of water within the water reservoir 23.

Water collected in the water reservoir 23 may be pumped via a water conduit 24 to a water injector 25 configured to inject water into the cathode inlet line 11. One or more pumps 22 may be provided for this purpose. A water level sensor 28 or similar may be provided for measuring the amount of water collected within the water reservoir 23. The water injector 25 may be configured for spraying liquid water into the cathode inlet line 11. If a humidifier is present (not illustrated in FIG. 2), the water injector 25 should typically be located downstream of the humidifier, such that compressed air first passes the humidifier and thereafter the water injector 25 before it is reacted at the fuel cell stack 10. In the fuel cell system 1 comprising the water injector 25, a humidifier may in some examples be omitted.

A cooling system 30 is provided for cooling of the fuel cell stack 10 during operation. In the illustrated example, the cooling system 30 comprises a heat exchanger 33, a cooling circuit 34, a first temperature sensor 31 configured to measure an inlet temperature of coolant at a cooling inlet of the fuel cell stack 10, and a second temperature sensor 32 configured to measure an outlet temperature of coolant at a cooling outlet of the fuel cell stack 10. The cooling system 30 may further be arranged to cool, e.g., the power converter 17 and/or other parts of the fuel cell system 1, such as via additional cooling circuits.

A computer system 50 is further provided, that may be communicatively connected to various parts of the fuel cell system 1 and to other parts of the vehicle 100, such as to control units of the electric energy storage system 2 and the electric propulsion system 3, respectively. The computer system 50 is configured to control water recuperation and injection in the water recuperation and injection system 20.

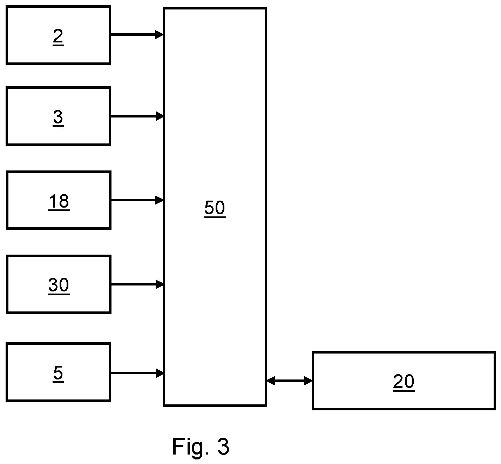

**FIG. 3** is a schematic diagram illustrating communicative connections between the computer system 50 and various parts of the fuel cell system 1 and of the vehicle 100. The computer system 50 is configured to receive data from the electric energy storage system 2, such as data relating to a state of charge, a power capability, and/or a temperature of the electric energy storage system 2. The computer system 50 is further configured to receive data from the electric propulsion system 3, such as data relating to a power request. It is also configured to receive data from a navigation system 5 of the vehicle 100. The navigation system 5 may comprise one or more receivers and/or sensors, such as a global positioning system (GPS) receiver, an accelerometer, etc. The navigation system 5 may be configured to determine a geographic location and position of the vehicle 100 and to provide data relating to a planned travelling route of the vehicle 100 to the computer system 50. The computer system 50 is further configured to receive measurement data from the voltage sensor 18 and from the temperature sensors 31, 32 of the cooling system 30. It is also configured to receive sensor data from at least one sensor of the water recuperation and injection system 20, such as sensor data relating to an amount of water stored within the water reservoir 23. Based on the received data, the computer system 50 is configured to control the water recuperation and injection system 20, such as the water injector 25, the pump 22, and the valve 21.

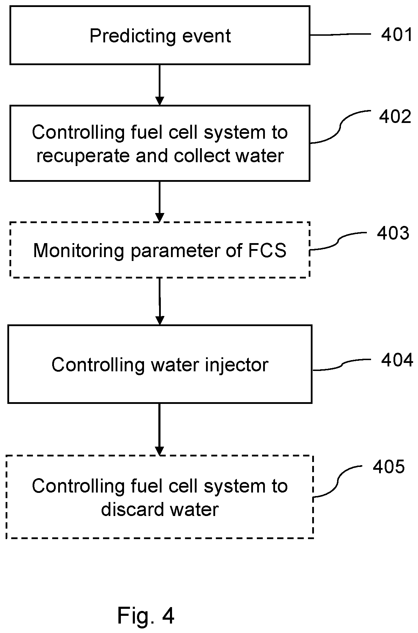

**FIG. 4** illustrates a method that may be implemented by a processing circuitry of the computer system 50 in the fuel cell system 1 illustrated in FIG. 2. The method comprises the following actions:

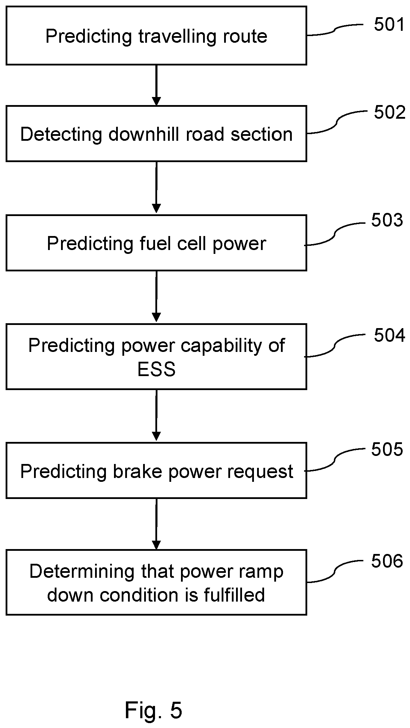

**Action 401:** Predicting an event during which a power ramp down of the fuel cell system 1 is expected. This will be further described below with reference to FIG. 5.

**Action 402**: Controlling the fuel cell system 1 to recuperate water from at least one fuel cell exhaust line 13, 14, preferably at least from the cathode exhaust line 13, and collect the recuperated water in the water reservoir 23 in dependence on the predicted event. This action may comprise determining an amount of water to be injected during the predicted event. It may further comprise controlling an amount of water collected in the water reservoir 23 to at least the determined amount of water to be injected. Feedback from the water level sensor 28 may be used to control the amount of water in the water reservoir 23. The amount of water to be injected during the predicted event may be determined based on properties of the fuel cell stack 10, such as depending on a type of catalyst used in the fuel cell stack 10 and/or a type of membrane, wherein experimental data from tests conducted on the fuel cell system 1 may be used as a basis for the determination. The amount of water may further be estimated based on a predicted temperature of the fuel cell stack 10 during the predicted event.

**Action 404**: Controlling the water injector 25 to inject water from the water reservoir 23 into the cathode inlet line 11 of the fuel cell system 1 in connection with the power ramp down during the predicted event. Liquid water may, e.g., be sprayed into the cathode inlet line 11 or introduced via a water distribution manifold. Preferably, the water is dispersed in the form of fine droplets or a mist, such as by using an ultrasonic system. The water injection may be initiated immediately as the predicted event starts, such as immediately when a downhill road section is reached by the vehicle 100.

The method may further comprise an **action 403** of monitoring at least one operational parameter of the fuel cell system 1, such as the fuel cell voltage and/or the fuel cell stack temperature, wherein the action 404 of controlling the water injector 25 is based on the monitored at least one operational parameter. The fuel cell voltage may be determined from the sensor data received from the voltage sensor 18. The fuel cell stack temperature may be modelled based on coolant inlet and outlet temperature as measured by the temperature sensors 31, 32, respectively, and the fuel cell power. The action 404 of controlling the water injector 25 may comprise controlling the water injection to maintain a magnitude of the fuel cell voltage above a predetermined threshold level or within a predetermined voltage range, and/or to maintain the fuel cell stack temperature below a predetermined threshold temperature, or within a predetermined temperature range. In this way, flooding and dehydration of the membrane may be prevented, as well as detrimental voltage spikes and other hazardous conditions.

The method may further comprise an **action 405** of controlling the fuel cell system 1 to discard the water collected in the water reservoir 23 in connection with shutdown of the fuel cell system 1. This may be in connection with parking of the vehicle 100, when the fuel cell system 1 is turned off. Freezing of the water is thereby prevented, and weight is reduced.

**FIG. 5** illustrates actions that may be performed in connection with predicting the event in the action 401. In the action 401, when the fuel cell system 1 is located in the vehicle 100, the processing circuitry may be configured to predict the event by performing the following actions:

**Action 501:** Predicting an expected travelling route of the vehicle 100. This prediction may be based on vehicle and route related information, such as on data received from the navigation system 5 of the vehicle 100.

**Action 502**: Detecting a downhill road section along the expected travelling route. The detection many be based on topographic information for the expected travelling route as received from the navigation system 5.

**Action 503**: Predicting a fuel cell power expected to be produced by the fuel cell system 1 at least at a start of the detected downhill road section. It is normally sufficient that the fuel cell power at the start of the downhill road section is predicted, since the fuel cell system 1 will during the descent be controlled to an idle condition in which the fuel cell power has been ramped down to a minimum. The fuel cell power expected to be produced at the start of the detected downhill road section may be predicted based on a predicted power request from the electric propulsion system 3. The power request along the expected travelling route may be continually predicted based on vehicle data and information from the navigation system 5 of the vehicle 100, using e.g. map data to foresee a topography along the expected travelling route, traffic data, weather data, etc. A prediction horizon corresponding to a few kilometers may typically be used.

**Action 504**: Predicting a power capability of the electric energy storage system 2 at least at the start of the detected downhill road section, i.e., the amount of electric power that may be stored in the electric energy storage system 2. The power capability of the electric energy storage system 2 may in some cases be predicted along the entire downhill road section, to identify if and where service brakes, such as disc brakes, must be applied.

**Action 505**: Predicting a brake power request along the detected downhill road section. The brake power request may e.g. be predicted based on a weight of the vehicle 100, other vehicle characteristics such as a frontal area, rolling coefficients, etc., a speed limitation or a desired vehicle speed, and a road gradient along the downhill road section as determined based on data from the navigation system 5.

**Action 506**: Determining that a predetermined power ramp down condition is expected to be fulfilled along the detected downhill road section. The determining of that the predetermined power ramp down condition is fulfilled may be based on the predicted brake power request, the predicted power capability of the electric energy storage system 2, and the predicted fuel cell power. The predetermined power ramp down condition may be considered fulfilled when a sum of the predicted fuel cell power and the predicted brake power exceeds the predicted power capability of the electric energy storage system 2 during at least a part of the downhill road section, such as for at least a predetermined minimum duration. When it is determined that the predetermined power ramp down condition is fulfilled, the detected downhill road section is identified as an event during which a power ramp down of the fuel cell system 1 is expected. Hence, the method as illustrated in FIG. 4 will proceed to the action 402 of controlling the fuel cell system 1, i.e., the water recuperation and injection system 20, to recuperate and collect water to prepare for water injection during the downhill road section. An amount of water sufficient to enable a fast power ramp down during the downhill road section may hence be collected within the water reservoir 23.

In an exemplary scenario, the vehicle 100 travels along a route comprising a first uphill road section followed by a first downhill road section, and a second uphill road section followed by a second downhill road section as predicted in the actions 501 and 502. The computer system 50 assesses whether the power ramp down condition is fulfilled for each one of the first and second downhill road sections.

For the first downhill road section, the sum of the predicted fuel cell power and the predicted brake power is lower than the predicted power capability of the electric energy storage system 2. Hence, the electric energy storage system 2 will be able to store the energy generated by the fuel cell system 1 during ramp down of the output power as the vehicle 100 enters the first downhill road section. This means that the power ramp down condition is not fulfilled for the first downhill road section. During the first downhill slope, electric energy is stored in the electric energy storage system 2.

The second downhill road section is steeper than the first downhill road section. The sum of the predicted fuel cell power as the vehicle 100 enters into the second downhill road section and the predicted brake power needed to brake the vehicle 100 by the auxiliary brake system is determined. The sum exceeds the predicted power capability of the electric energy storage system 2. Hence, when the vehicle 100 reaches a crest between the second uphill and downhill road sections, a quick ramp down of power is necessary if the vehicle 100 should be able to reduce its speed without applying the service brakes. The power ramp down condition is considered fulfilled. Hence, the water recuperation and injection system 20 will be controlled to recuperate and collect water within the water reservoir 23 in preparation for the second downhill road section. As soon as the downhill road section is reached, the water injector 25 is controlled to inject water into the cathode inlet line 11 while ramping down the output power of the fuel cell stack 10. During the power ramp down, the fuel cell voltage and fuel cell stack temperature are monitored to ensure that there is no flooding or dehydration of the membrane.

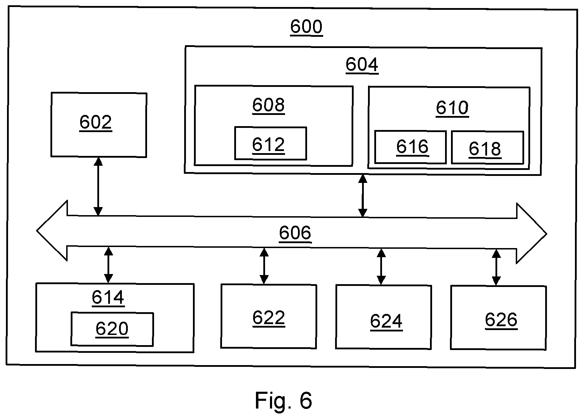

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604**, and a system bus **606**. The computer system **600** may include at least one computing device having the processing circuitry **602**. The system bus **606** provides an interface for system components including, but not limited to, the memory **604** and the processing circuitry **602**. The processing circuitry **602** may include any number of hardware components for conducting data or signal processing or for executing computer code stored in memory **604**. The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602**. A basic input/output system (BIOS) **612** may be stored in the non-volatile memory **608** and can include the basic routines that help to transfer information between elements within the computer system **600**.

The computer system **600** may further include or be coupled to a non-transitory computer-readable storage medium such as the storage device **614**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610**, which may include an operating system **616** and/or one or more program modules **618**. All or a portion of the examples disclosed herein may be implemented as a computer program **620** stored on a transitory or non-transitory computer-usable or computer-readable storage medium (e.g., single medium or multiple media), such as the storage device **614**, which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602**. In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602**. The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, a list of numbered examples of the disclosure is presented.

Example 1. A computer system (50, 600) comprising processing circuitry (602) configured to:
predict an event during which a power ramp down of a fuel cell system (1) is expected,
control the fuel cell system (1) to recuperate water from at least one fuel cell exhaust line (13, 14) and collect the recuperated water in a water reservoir (23) in dependence on the predicted event,
control a water injector (25) to inject water from the water reservoir (23) into a cathode inlet line (11) of the fuel cell system (1) in connection with the power ramp down during the predicted event.

Example 2. The computer system of example 1, wherein the processing circuitry is configured to control the fuel cell system (1) to recuperate and collect water by: determining an amount of water to be injected during the predicted event, and controlling an amount of water collected in the reservoir (23) to at least the determined amount of water to be injected.

Example 3. The computer system of example 1 or 2, wherein the processing circuitry is further configured to:
monitor at least one operational parameter of the fuel cell system (1),
wherein the processing circuitry is configured to control the water injector (25) based on the monitored at least one operational parameter.

Example 4. The computer system of example 3, wherein the at least one operational parameter comprises at least a fuel cell voltage, and wherein the processing circuitry is configured to control the water injector (25) by controlling the water injection to maintain a magnitude of the fuel cell voltage above a predetermined threshold level or within a predetermined voltage range.

Example 5. The computer system of any one of the preceding examples, wherein the processing circuitry is configured to predict the event by:
predicting an expected travelling route of a vehicle (100), in which the fuel cell system (1) is arranged to provide output power for propulsion of the vehicle (100) and for charging of an electric energy storage system (2),
detecting a downhill road section along the expected travelling route, and
determining that a predetermined power ramp down condition is expected to be fulfilled along the detected downhill road section.

Example 6. The computer system of example 5, wherein the processing circuitry is further configured to predict the event by:
predicting a fuel cell power expected to be produced by the fuel cell system (1) at least at a start of the detected downhill road section,
predicting a power capability of the electric energy storage system (2) at least at the start of the detected downhill road section,
predicting a brake power request along the detected downhill road section,
wherein the processing circuitry is configured to determine that the predetermined power ramp down condition is fulfilled based on the predicted brake power request, the predicted power capability of the electric energy storage system (2), and the predicted fuel cell power.

Example 7. The computer system of example 6, wherein the predetermined power ramp down condition is considered fulfilled when a sum of the predicted fuel cell power and the predicted brake power exceeds the predicted power capability of the electric energy storage system (2) during at least a part of the downhill road section, such as for at least a predetermined minimum duration.

Example 8. The computer system of any one of the preceding examples, wherein the processing circuitry is further configured to control the fuel cell system (1) to discard the water collected in the water reservoir (23) in connection with shutdown of the fuel cell system (1).

Example 9. A fuel cell system (1) comprising the computer system (50, 600) of any of examples 1-8.

Example 10. The fuel cell system of example 9, further comprising a fuel cell stack (10), a water reservoir (23) for collection of water from at least one exhaust line (13, 14) from the fuel cell stack (10), and a water injector (25) for injection of water from the water reservoir (23) into a cathode inlet line (11) of the fuel cell stack (10).

Example 11. A vehicle (100) comprising the fuel cell system (1) of example 9 or 10.

Example 12. The vehicle of example 11, further comprising an electric energy storage system (2) and an electric propulsion system (3), wherein the fuel cell system (1) is arranged to provide output power for charging of the electric energy storage system (2) and for driving the electric propulsion system (3).

Example 13. A computer-implemented method for controlling a fuel cell system (1), the method comprising:
predicting (401), by processing circuitry (602) of a computer system (50, 600), an event during which a power ramp down of the fuel cell system (1) is expected,
controlling (402), by the processing circuitry, the fuel cell system (1) to recuperate water from at least one fuel cell exhaust line (13, 14) and collect the recuperated water in a water reservoir (23) in dependence on the predicted event,
controlling (404), by the processing circuitry, a water injector (25) to inject water from the water reservoir (23) into a cathode inlet line (11) of the fuel cell system (1) in connection with the power ramp down during the predicted event.

Example 14. The method of example 13, wherein the controlling (402) of the fuel cell system (1) to recuperate and collect water comprises:
determining an amount of water to be injected during the predicted event, and
controlling an amount of water collected in the reservoir (23) to at least the determined amount of water to be injected.

Example 15. The method of example 13 or 14, further comprising:
monitoring (403), by the processing circuitry, at least one operational parameter of the fuel cell system (1),
wherein the controlling (404) of the water injector (25) is based on the monitored at least one operational parameter.

Example 16. The method of example 15, wherein the at least one operational parameter comprises at least a fuel cell voltage, and wherein the controlling (404) of the water injector (25) comprises controlling the water injection to maintain a magnitude of the fuel cell voltage above a predetermined threshold level or within a predetermined voltage range.

Example 17. The method of any one of examples 13-16, wherein the predicting (401) of the event comprises:
predicting (501) an expected travelling route of a vehicle (100), in which the fuel cell system (1) is arranged to provide output power for propulsion of the vehicle (100) and for charging of an electric energy storage system (2),
detecting (502) a downhill road section along the expected travelling route, and
determining (506) that a predetermined power ramp down condition is expected to be fulfilled along the detected downhill road section.

Example 18. The method of example 17, wherein the predicting (401) of the event further comprises:
predicting (503) a fuel cell power expected to be produced by the fuel cell system (1) at least at a start of the detected downhill road section,
predicting (504) a power capability of the electric energy storage system (2) at least at the start of the detected downhill road section,
predicting (505) a brake power request along the detected downhill road section, wherein the determining (506) of that the predetermined power ramp down condition is fulfilled is based on the predicted brake power request, the predicted power capability of the electric energy storage system (2), and the predicted fuel cell power.

Example 19. The method of example 18, wherein the predetermined power ramp down condition is fulfilled when a sum of the predicted fuel cell power and the predicted brake power exceeds the predicted power capability of the electric energy storage system (2) during at least a part of the downhill road section, such as for at least a predetermined minimum duration.

Example 20. The method of any one of examples 13 to 19, further comprising:
controlling (405), by the processing circuitry, the fuel cell system (1) to discard the water collected in the water reservoir (23) in connection with shutdown of the fuel cell system (1).

Example 21. A computer program product comprising program code for performing, when executed by the processing circuitry, the method of any of examples 13-20.

Example 22. A non-transitory computer-readable storage medium comprising instructions, which when executed by the processing circuitry, cause the processing circuitry to perform the method of any of examples 13-20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (50, 600) comprising processing circuitry (602) configured to:
predict an event during which a power ramp down of a fuel cell system (1) is expected,
control the fuel cell system (1) to recuperate water from at least one fuel cell exhaust line (13, 14) and collect the recuperated water in a water reservoir (23) in dependence on the predicted event,
control a water injector (25) to inject water from the water reservoir (23) into a cathode inlet line (11) of the fuel cell system (1) in connection with the power ramp down during the predicted event.

2. The computer system of claim 1, wherein the processing circuitry is configured to control the fuel cell system (1) to recuperate and collect water by:
determining an amount of water to be injected during the predicted event, and
controlling an amount of water collected in the reservoir (23) to at least the determined amount of water to be injected.

3. The computer system of claim 1 or 2, wherein the processing circuitry is further configured to:
monitor at least one operational parameter of the fuel cell system (1),
wherein the processing circuitry is configured to control the water injector (25) based on the monitored at least one operational parameter.

4. The computer system of claim 3, wherein the at least one operational parameter comprises at least a fuel cell voltage, and wherein the processing circuitry is configured to control the water injector (25) by controlling the water injection to maintain a magnitude of the fuel cell voltage above a predetermined threshold level or within a predetermined voltage range.

5. The computer system of any one of the preceding claims, wherein the processing circuitry is configured to predict the event by:
predicting an expected travelling route of a vehicle (100), in which the fuel cell system (1) is arranged to provide output power for propulsion of the vehicle (100) and for charging of an electric energy storage system (2),
detecting a downhill road section along the expected travelling route, and
determining that a predetermined power ramp down condition is expected to be fulfilled along the detected downhill road section.

6. The computer system of claim 5, wherein the processing circuitry is further configured to predict the event by:
predicting a fuel cell power expected to be produced by the fuel cell system (1) at least at a start of the detected downhill road section,
predicting a power capability of the electric energy storage system (2) at least at the start of the detected downhill road section,
predicting a brake power request along the detected downhill road section,
wherein the processing circuitry is configured to determine that the predetermined power ramp down condition is fulfilled based on the predicted brake power request, the predicted power capability of the electric energy storage system (2), and the predicted fuel cell power.

7. The computer system of claim 6, wherein the predetermined power ramp down condition is considered fulfilled when a sum of the predicted fuel cell power and the predicted brake power exceeds the predicted power capability of the electric energy storage system (2) during at least a part of the downhill road section, such as for at least a predetermined minimum duration.

8. The computer system of any one of the preceding claims, wherein the processing circuitry is further configured to control the fuel cell system (1) to discard the water collected in the water reservoir (23) in connection with shutdown of the fuel cell system (1).

9. A fuel cell system (1) comprising the computer system (50, 600) of any of claims 1-8.

10. The fuel cell system of claim 9, further comprising a fuel cell stack (10), a water reservoir (23) for collection of water from at least one exhaust line (13, 14) from the fuel cell stack (10), and a water injector (25) for injection of water from the water reservoir (23) into a cathode inlet line (11) of the fuel cell stack (10).

11. A vehicle (100) comprising the fuel cell system (1) of claim 9 or 10.

12. The vehicle of claim 11, further comprising an electric energy storage system (2) and an electric propulsion system (3), wherein the fuel cell system (1) is arranged to provide output power for charging of the electric energy storage system (2) and for driving the electric propulsion system (3).

13. A computer-implemented method for controlling a fuel cell system (1), the method comprising:
predicting (401), by processing circuitry (602) of a computer system (50, 600), an event during which a power ramp down of the fuel cell system (1) is expected,
controlling (402), by the processing circuitry, the fuel cell system (1) to recuperate water from at least one fuel cell exhaust line (13, 14) and collect the recuperated water in a water reservoir (23) in dependence on the predicted event,
controlling (404), by the processing circuitry, a water injector (25) to inject water from the water reservoir (23) into a cathode inlet line (11) of the fuel cell system (1) in connection with the power ramp down during the predicted event.

14. A computer program product (614) comprising program code for performing, when executed by the processing circuitry (602), the method of claim 13.

15. A non-transitory computer-readable storage medium (614) comprising instructions, which when executed by the processing circuitry (602), cause the processing circuitry to perform the method of claim 13.
